# EUROPEAN PATENT APPLICATION

(11) **EP 3 220 317 A1**
(43) Date of publication of application: **20.09.2017**
(21) Application number: 14905666.5
(22) Date of filing: 14.11.2014
(51) Int. Cl.: G06Q 10/02, G06Q 10/08, G06Q 30/04, G06Q 50/10

(54) **SHARED VEHICLE MANAGEMENT DEVICE AND SHARED VEHICLE MANAGEMENT METHOD**

(71) Applicant: NISSAN MOTOR CO., LTD., Yokohama-shi, Kanagawa 221-0023 (JP)
(72) Inventor: HIROSE, Satoru, Atsugi-shi Kanagawa 243-0123 (JP); CHINOMI, Satoshi, Atsugi-shi Kanagawa 243-0123 (JP); NAGAI, Yukiko, Atsugi-shi Kanagawa 243-0123 (JP)
(74) Representative: Global IP Europe Patentanwaltskanzlei
(86) International application number: PCT/JP2014/080175
(87) International publication number: WO 2016/075808

(57) **Abstract**

A shared vehicle management device (100) is provided with: a storage means (30) for storing the information of a station at which a shared vehicle can be lent and returned; a first use reception means (10) for receiving, from a user, a use request for immediate use of the shared vehicle, during a predetermined immediate use time period which includes at least a portion of an available time period of the shared vehicle; and a second use reception means (10) for receiving, from a user, a use reservation to start using the shared vehicle from the start time of the next available time period

## Description

### Technical Field

The present invention relates to a shared vehicle management device and a shared vehicle management method for managing a plurality of shared vehicles that are used by a plurality of users.

### Background Art

A car sharing system for a plurality of users to use a plurality of shared vehicles is known. In this car sharing system, a user that has finished using a shared vehicle returns the shared vehicle to a specified station (Patent Document 1).

### Prior Art Documents

### Patent Documents

Patent Document 1: Japanese Laid-Open Patent Application No. 2002-215739

### Summary of the Invention

### Problem to be Solved by the Invention

A so-called drop-off type one-way car sharing system, in which a shared vehicle that is rented from one station is permitted to be returned to another station, has been proposed as such a car sharing system.

In this one-way car sharing system, a user can freely select a station to return a shared vehicle; therefore, the return location of the shared vehicle after use is not set. Consequently, there is the problem that, for example, if a user intends to use a shared vehicle by the same route at a set time (for example for commuting to work or school), there are cases in which a shared vehicle is not on standby at the desired station when the user tries to use a shared vehicle, and the user cannot use a shared vehicle, leading to a decline in the utilization rate of the shared vehicle.

The problem that the present invention tries to solve is to propose a mode of using shared vehicles that matches the purpose of the user in a one-way car sharing system, and to improve the utilization rate of the shared vehicles.

### Means of Achieving the Object

The present invention solves the problem by receiving, from a user, a use request for immediate use of a shared vehicle, during a predetermined immediate use time period, which includes at least a portion of an available time period of the shared vehicle, and receiving, from a user, a use reservation to start using the shared vehicle from the start time of the next available time period, during a predetermined reservation time period.

### Effects of the Invention

According to the present invention, a use reservation to start using a shared vehicle at a specific time is received from a user; therefore, it becomes possible to propose a mode of using shared vehicles that matches the purpose of the user. As a result, the convenience of the car sharing system is improved and the utilization rate of shared vehicles is improved.

### Brief Description of the Drawings

[Figure 1A] is a schematic diagram illustrating one example of a method for a user to use a shared vehicle in a shared vehicle management system, equipped with the shared vehicle management device according to an embodiment of the present invention.
[Figure 1B] is a block diagram of a shared vehicle management system equipped with the shared vehicle management device according to an embodiment of the present invention.
[Figure 2] is a view illustrating stations at which are disposed shared vehicles that are managed by the shared vehicle management system of Figure 1B.
[Figure 3] is a diagram illustrating one example of a method to receive a use reservation for a shared vehicle from a user.
[Figure 4] is a schematic diagram for illustrating a method to create a maintenance schedule of shared vehicles.
[Figure 5] is a flowchart illustrating one example of a control procedure to manage the use and return of shared vehicles by the shared vehicle management device according to an embodiment of the present invention.
[Figure 6A] is a flowchart illustrating one example of a use reservation reception process by the shared vehicle management device according to an embodiment of the present invention.
[Figure 6B] is a flowchart illustrating another example of a use reservation reception process by the shared vehicle management device according to an embodiment of the present invention.

### Embodiments to carry out the invention

The shared vehicle management device according to an embodiment of the present invention will be described below, based on the drawings. In the present embodiment, an example will be described in which the shared vehicle management device is applied to a shared vehicle management system for managing and operating a car sharing system, with which a plurality of users share a plurality of shared vehicles disposed at a plurality of stations. The car sharing system of the present embodiment is a so-called drop-off type, one-way car sharing system, in which a shared vehicle that is rented from one station is permitted to be returned to another station. A station is a location where shared vehicles can be parked, where shared vehicles can be lent and returned, and where shared vehicles that are not being used can be put on standby, including parking areas that are prepared in advance for the car sharing system.

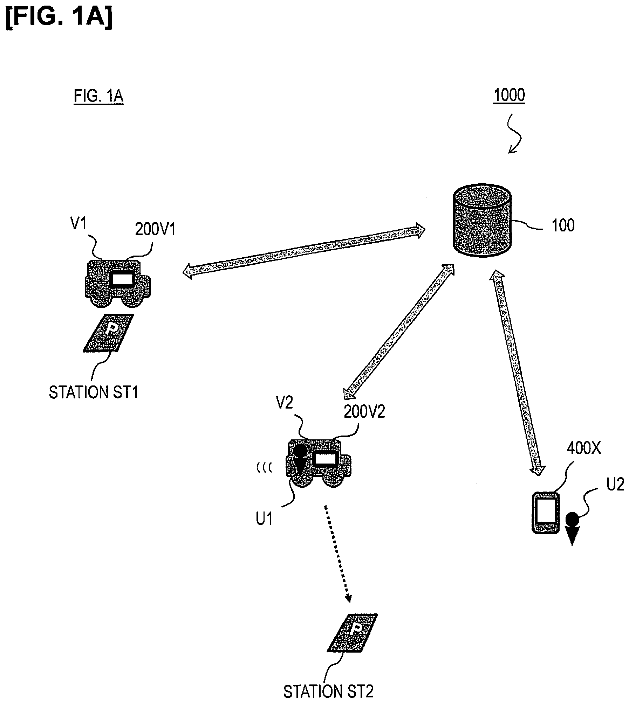

Here, Figure 1A is a schematic view illustrating one example of a method for a user to use a shared vehicle in a shared vehicle management system 1000, equipped with the shared vehicle management device 100 according to the present embodiment. In the shared vehicle management system 1000 of the present embodiment, a user selects a desired station from which to rent a shared vehicle (lending station) from a plurality of stations that are managed by the shared vehicle management device 100 by operating a user terminal device 400X, to make a use reservation of a shared vehicle that is on standby at the selected lending station.

For example, in the case illustrated in Figure 1A, if a user U2 selects station ST1 as the lending station, it is possible to make a use reservation for a shared vehicle V1 that is on standby at station ST1. At this time, a given station can be additionally set as a station to which the shared vehicle will be returned after use (drop-off station). Alternatively, the user U2 can set this drop-off station at the desired timing after making a use reservation for a shared vehicle. It thereby becomes possible for the user to utilize the drop-off type, one-way car sharing system, by boarding the reserved shared vehicle and using the shared vehicle, and thereafter returning the used shared vehicle to the set drop-off station.

On the other hand, in the case illustrated in Figure 1A, if the user U2 selects station ST2 as the lending station, since a shared vehicle that is on standby is not present at station ST2, the shared vehicle management device 100 transmits information to the effect that a shared vehicle that can currently be used is not present at station ST2, and that a shared vehicle cannot be lent at the station ST2, to the user terminal device 400X of the user U2.

The foregoing is the basic configuration of the one-way car sharing system in the present embodiment. In the present embodiment, the shared vehicle management device 100 calculates the utilization rate of each station, and provides a predetermined incentive benefit to a user that has used a station with a low utilization rate as a lending station or a drop-off station described above, in such a one-way car sharing system. In the present embodiment, a user is thereby encouraged to use a station with a low utilization rate, and it becomes possible to reduce the differences in the utilization rate among stations.

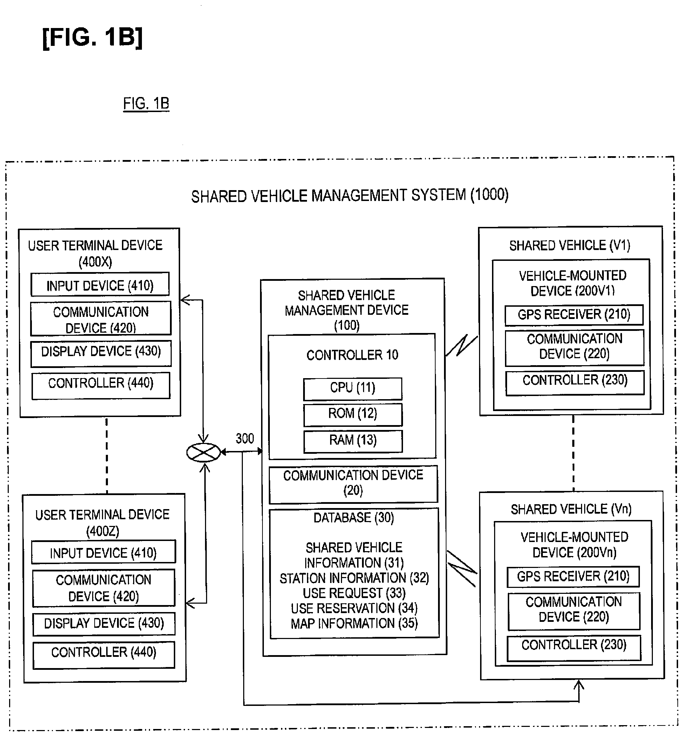

Figure 1B is a block diagram illustrating the shared vehicle management system 1000 of the present embodiment. As illustrated in Figure 1B, the shared vehicle management system 1000 of the present embodiment comprises a shared vehicle management device 100, vehicle-mounted devices 200V1-200Vn (hereinafter can be collectively referred to as vehicle-mounted device 200Vn) respectively provided in a plurality of shared vehicles V1-Vn (hereinafter can be collectively referred to as shared vehicle Vn) that are used by a plurality of users, and user terminal devices 400X-400Z (hereinafter can be collectively referred to as user terminal device 400X) that are respectively in the possession of a plurality of users. The numbers of vehicle-mounted devices 200V1-200Vn and user terminal devices 400X-400Z that configure the shared vehicle management system 1000 of the present embodiment are not limited.

The shared vehicle management device 100, vehicle-mounted devices 200V1-200Vn, and user terminal devices 400X-400Z respectively comprise communication devices (20, 220, 420), and are able to send and receive information to each other via a telecommunications network, such as the Internet 300. The communication pathway can be wired or wireless.

The user terminal device 400X of the present embodiment is a computer, provided with a ROM (Read Only Memory) that stores programs that are applied to the user terminal device 400X according to the present embodiment of the present invention, a CPU (Central Processing Unit) that acts as an operation circuit for executing each function by executing the programs that are stored in this ROM, and a RAM (Random Access Memory) that functions as an accessible storage device. The user terminal device 400X of the present embodiment can be a personal computer, a smartphone, a PDA (Personal Digital Assistant), and other portable terminal devices.

The user terminal device 400X of the present embodiment comprises an input device 410 for receiving input information, such as a use request for immediate use of a shared vehicle Vn at a desired lending station by each user and a use reservation to start using the shared vehicle Vn at a predetermined time, a communication device 420 that communicates with external devices, such as the shared vehicle management device 100, a display device 430 for notifying information to each user, and a controller 440 that executes a control process for the use of a shared vehicle Vn by a user.

Examples of input devices 410 of the user terminal device 400X that can be used include a touch panel or a joystick that is arranged on the display screen and with which a user can carry out manual inputs, and devices such as microphones with which a user can carry out voice inputs. An example of a display device 430 is a display, which can also be used as the input device 410 if using a touch panel display.

The controller 440 of the present embodiment acquires information on the current location of the user that operates the user terminal device 400X using a location acquisition device provided to the user terminal device 400X, such as a GPS (Global Positioning System) receiver, which is not shown, and transmits the acquired current location information to the shared vehicle management device 100 via the communication device 420.

In addition, the controller 440 receives input information, such as a use request for immediate use of a shared vehicle Vn by each user and a use reservation to start using the shared vehicle Vn at a predetermined time, and transmits the information to the shared vehicle management device 100 via the communication device 420. An immediate use of a shared vehicle Vn means a mode of use in which, for example, starting the use of a shared vehicle Vn within a short period of time (for example, within 30 minutes), after a user inputs a use request into a user terminal device 400X. Additionally, in the present embodiment, a use reservation for a shared vehicle Vn means a reservation to start using a shared vehicle Vn from a start time of the next available time period of the shared vehicle Vn. For example, if the available time period is set to 8:00-20:00 (8:00 AM to 8:00 PM), a use reservation is to make a reservation to start using the shared vehicle Vn from the next 8:00 (8:00 AM).

The use request and the use reservation described above include the user's ID information, the user's current location information, information on the lending station set by the user, the ID information of the shared vehicle Vn that the user is trying to use, and information on the drop-off station that is set by the user. When necessary, the user terminal device 400X of the present embodiment receives information on each station, information on shared vehicles Vn that are candidates for use at each station, maintenance schedule information for shared vehicles Vn described later, and the like, from the shared vehicle management device 100. In the present embodiment, setting of the drop-off station can be carried out at the time at which a use request or a use reservation is transmitted in this manner, or be carried out at a desired time during use of the shared vehicle Vn, after transmitting a use request or a use reservation for a shared vehicle Vn.

In addition, in the present embodiment, the user terminal device 400X can function as a navigation device for guiding a travel route of the shared vehicle Vn to the user. In this case, the user terminal device 400X can be configured such that, for example, map information is stored in advance in the ROM, or the like, that is provided to the user terminal device 400X, and the current location of the shared vehicle Vn that the user is currently using and the location of the drop-off station that the user has set are displayed, along with the map information, on the display device 430, to guide the travel route from the current location of the shared vehicle Vn to the drop-off station.

The vehicle-mounted device 200Vn of the present embodiment comprises a GPS receiver 210 that detects the current location of each shared vehicle Vn, a communication device 220 that communicates with an external device such as the shared vehicle management device 100, and a controller 230 for executing the control process for the use of a shared vehicle Vn by the user.

This vehicle-mounted device 200Vn can be a simple configuration that utilizes the function of the user terminal device 400X. For example, if a GPS receiver, a communication device, and a route calculation and route guiding device are installed on the user terminal device 400X, the vehicle-mounted device 200Vn can carry out only the user authentication shown below, utilizing those functions.

In the present embodiment, the controller 230 carries out a user authentication, regarding whether or not the user that has boarded the shared vehicle Vn matches the user that made the use reservation of the shared vehicle Vn, using an authentication device (not shown) provided in the vehicle-mounted device 200Vn. For example, the controller 230 uses a device that is capable of communicating by NFC (Near Field Communication) as an authentication device to read the ID information of the user from a user terminal device 400X that is in the possession of the user, or a membership card, etc., accesses the shared vehicle management device 100 via the communication device 220 to acquire reservation information for the shared vehicle Vn, and carries out a user authentication of the user that has boarded the shared vehicle Vn.

In addition, the controller 230 transmits information on the current location acquired using the GPS receiver 210 to the shared vehicle management device 100 via the communication device 220.

Furthermore, the controller 230 notifies information, etc., transmitted from the shared vehicle management device 100 to the user, using a display or a speaker, which are not shown. In the present embodiment, the controller 230 receives, for example, information on each station, information on shared vehicles Vn that can be used at each station, and maintenance schedule information for shared vehicles Vn described later, from the shared vehicle management device 100, and notifies the user.

In the present embodiment, the vehicle-mounted device 200Vn can function as a navigation device for guiding a travel route from the current location of the shared vehicle Vn to the drop-off station, in the same manner as the user terminal device 400X described above.

The shared vehicle management device 100 of the present embodiment comprises a controller 10 that functions as a server for the shared vehicle management system 1000 and that executes a control process for managing and operating the car sharing system, a communication device 20 that can mutually communicate with the vehicle-mounted device 200Vn and the user terminal device 400X, and a database 30 that stores information received from the communication device 20, information on each shared vehicle Vn, and information on each station, or the like.

In the present embodiment, the controller 10 appropriately stores the information received from each user terminal device 400X and each vehicle-mounted device 200Vn via the communication device 20 in the database 30. Then, the controller 10 manages the use and return of the shared vehicle Vn by the user, based on the information that is received by the communication device 20 and the information that is stored in the database 30, by the functions described later.

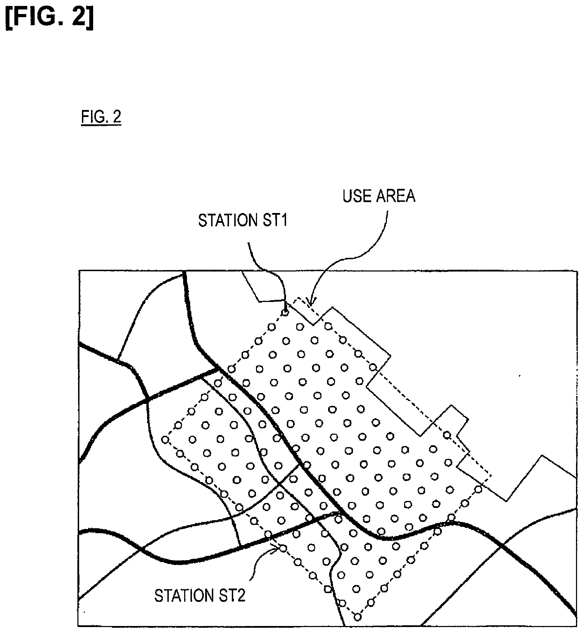

For example, in the present embodiment, a plurality of stations indicated by the circles are provided in a predetermined use area on the map (area indicated by the dashed line in Figure 2), and in a case in which a user uses a shared vehicle Vn rented from station ST1 and thereafter returns the shared vehicle Vn to station ST2, the controller 10 is capable of managing the use and return of the shared vehicle Vn by the user, as illustrated in Figure 2. In the example illustrated in Figure 2, the stations are arranged such that the distances between adjacent stations become equal, but the mode of arrangement is not limited thereto.

In addition, the shared vehicle management device 100 creates a maintenance schedule for maintaining each shared vehicle Vn. In the car sharing system of the present embodiment, the shared vehicle management device 100 can set an available time period (business hours) during which immediate use of a shared vehicle Vn by a user is permitted, and can carry out maintenance of shared vehicle Vn outside of business hours, which is from the end time of this available time period to the start time of the next available time period. Examples of maintenance of the shared vehicle Vn include replenishing the driving energy of the shared vehicle Vn (meaning gasoline in the case of a gasoline vehicle which runs by being driven by an internal combustion engine, and the charging amount of the battery in the case of an electric vehicle. Same below.) and carrying out at least one of inspection, maintenance, repair, and cleaning of the shared vehicle Vn.

In the car sharing system of the present embodiment, maintenance sites for carrying out maintenance of shared vehicles Vn are provided other than the above-described stations, and staff, etc., who operate the car sharing system move the shared vehicles Vn to the maintenance sites to carry out maintenance of the shared vehicles Vn outside of business hours. In the present embodiment, by providing maintenance sites for replenishing drive energy and carrying out inspection, maintenance, repair, and cleaning of the shared vehicles Vn in addition to stations where shared vehicles Vn are lent and returned, it is possible to reduce costs that incur by providing a maintenance facility at each station. Additionally, in the present embodiment, maintenance can be efficiently carried out by intensively carrying out maintenance of shared vehicles Vn at specific maintenance sites.

Alternatively, in the present embodiment, facilities for carrying out maintenance of shared vehicles Vn can be installed in arbitrary stations from among the stations described above, to carry out maintenance of shared vehicles Vn at the stations.

Then, in the present embodiment, a shared vehicle Vn that has been subjected to maintenance is routed to one of the stations when necessary by staff, etc., who operate the car sharing system, to be used by a user from the next business hours.

The shared vehicle management device 100 of the present embodiment creates a maintenance schedule for carrying out maintenance and routing of shared vehicles Vn outside of business hours in this manner. Then, the shared vehicle management device 100 is able to receive, from a user, a use reservation to start using a shared vehicle Vn from the start time of the next business hours according to the created maintenance schedule, as described later.

The database 30 of the shared vehicle management device 100 according to the present embodiment stores shared vehicle information 31, station information 32, use request 33 and use reservation 34 received from the user, and map information 35. In the example illustrated in Figure 1B, an example was illustrated in which only one database 30 is provided, but the shared vehicle management device 100 according to the present embodiment can be provided with a plurality of databases 30, and the shared vehicle information 31, station information 32, use request 33, use reservation 34, and map information 35 can be separately stored in each database 30.

Here, shared vehicle information 31 is information on each shared vehicle Vn, and station information 32 is information on each station.

Additionally, use request 33 is input information that each user inputs using a user terminal device 400X, in order to request an immediate use of a shared vehicle Vn. Use reservation 34 is input information that each user inputs using a user terminal device 400X, to reserve a use of a shared vehicle Vn from the start time of the next business hours.

The controller 10 of the shared vehicle management device 100 according to the present embodiment comprises a ROM (Read Only Memory) 12 that stores programs for executing processes to manage and operate a car sharing system, a CPU (Central Processing Unit) 11 that acts as an operation circuit that functions as a shared vehicle management device 100 by executing the programs that are stored in this ROM 12, and a RAM (Random Access Memory) 13 that functions as an accessible storage device, as illustrated in Figure 1B.

The controller 10 of the shared vehicle management device 100 realizes a use request reception function, a maintenance schedule creation function, a use reservation reception function, a notification function, a return reception function, and a billing function. The controller 10 of the shared vehicle management device 100 according to the present embodiment is a computer that realizes each function by a cooperation between software for realizing the functions described above, and the above-described pieces of hardware.

Each function that is realized by the controller 10 of the shared vehicle management device 100 will be described below.

First, the use request reception function that is executed by the controller 10 of the present embodiment will be described. The controller 10 acquires a use request that requests an immediate use of a shared vehicle Vn from the user terminal device 400X by the use request reception function, and stores the acquired use request information in the database 30 as use request 33. The use request includes the user's ID information, the user's current location information, information on the lending station set by the user, the ID information of the shared vehicle Vn that the user is trying to use, and information on the drop-off station that is set by the user, as described above.

In the one-way car sharing system of the present embodiment, during a predetermined immediate use time period, the controller 10 accepts, as a use request, only requests for immediate use to start using a shared vehicle Vn within a short period of time (for example, within 30 minutes) from the time of receiving the use request. On the other hand, in the one-way car sharing system of the present embodiment, the controller 10 does not accept a mode of use requesting a future use of a shared vehicle Vn during this immediate use time period. Specifically, during this immediate use time period, the controller 10 does not accept a mode of use to start using a shared vehicle Vn after a few hours, or a mode of use to start using a shared vehicle Vn the following day or later.

In this one-way car sharing system, a user can freely select a station to return a shared vehicle Vn; therefore, the return location of the shared vehicle Vn after use is not set. Accordingly, in a one-way car sharing system, it is normally difficult to control the standby location of a shared vehicle Vn (that is, to put a shared vehicle Vn on standby at a specific lending station at a specific time).

In a conventional one-way car sharing system, when receiving, from a user, a mode of use requesting a future use of a shared vehicle Vn, it is necessary to have a shared vehicle Vn on standby at the desired lending station at the desired time of the user, and in order to realize this, for example, a method is conceivable in which a shared vehicle Vn is moved to, or put on standby at, the lending station in advance and the use by other users is prohibited; however, with this method, since a shared vehicle Vn is put on standby at a station in a state in which the use thereof is prohibited, the utilization rate of the shared vehicle Vn is reduced.

Accordingly, in the one-way car sharing system of the present embodiment, during a predetermined immediate use time period, a mode of use requesting a future use of a shared vehicle Vn is not accepted and only a mode of use requesting an immediate use of a shared vehicle Vn is accepted, to thereby improve the utilization rate of the shared vehicle Vn.

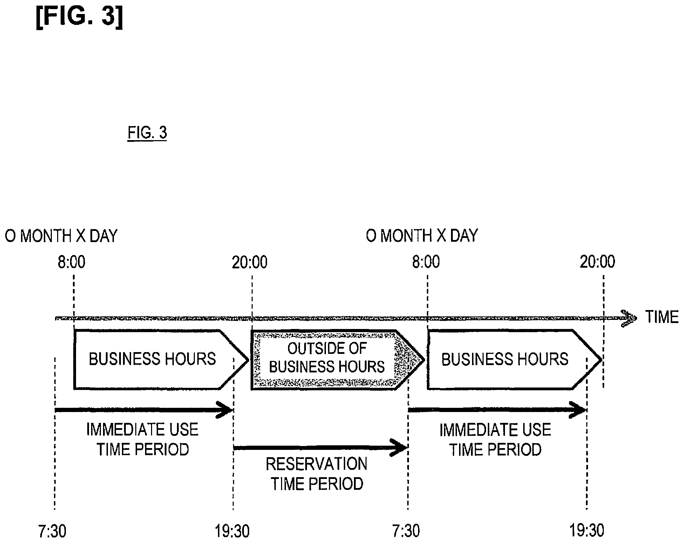

The controller 10 of the present embodiment is configured to be able to receive a use request from a user from a short period of time (for example, 30 minutes) prior to the time that the user actually starts using the shared vehicle Vn. In this case, for example, if the business hours are set to be 8:00-20:00 (8:00 AM to 8:00 PM), the immediate use time period can be set to 7:30-19:30, as a time period that is earlier than the business hours by the short period of time, such as 30 minutes, as illustrated in Figure 3.

Next, the maintenance schedule creation function that is executed by the controller 10 of the present embodiment will be described. In the present embodiment, the controller 10 determines the necessity of maintenance for each shared vehicle Vn, and creates a maintenance schedule for carrying out maintenance of the shared vehicle Vn outside of business hours if maintenance is determined to be necessary by the maintenance schedule creation function.

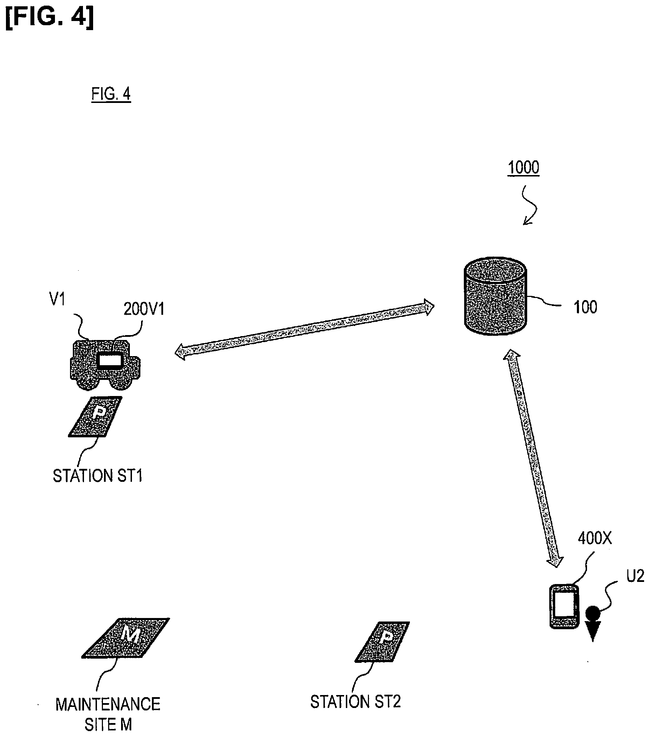

For example, using the scene illustrated in Figure 4 as an example, first, when it is detected that the remaining amount of drive energy of a shared vehicle V1, which is on standby at station ST1, is less than a predetermined threshold value, the controller 10 determines that it is necessary to replenish drive energy of the shared vehicle V1 (supplying gasoline, charging the battery, etc.). Then, the controller 10 creates a maintenance schedule, in which the shared vehicle V1 is moved to a maintenance site M outside of business hours, the drive energy is replenished at the maintenance site M, and the shared vehicle V1 is routed to one of the stations by the start time of the next business hours.

The station to which the shared vehicle V1 is routed can be the station ST1 where the shared vehicle V1 was originally on standby, or can be a station at which a shared vehicle Vn is not currently on standby (for example, station ST2 illustrated in Figure 4), from the viewpoint of preventing an uneven distribution of a plurality of shared vehicles Vn at specific stations. In a one-way car sharing system, since each user uses and returns a shared vehicle Vn respectively at desired stations, stations that tend to have a concentration as lending stations will lack in shared vehicles Vn, and stations that tend to have a concentration as drop-off stations will have an excess presence of shared vehicles Vn. Accordingly, in the present embodiment, uneven distribution of shared vehicles Vn at the stations can be suppressed by adjusting the maintenance schedule such that shared vehicles Vn are moved outside of business hours.

In addition, when receiving a use reservation from a certain user, designating station ST2 illustrated in Figure 4 as the lending station, by the use reservation reception function described later, the controller 10 creates a maintenance schedule such that the shared vehicle V1 is routed to station ST2 after maintenance.

Additionally, the controller 10 can adjust the maintenance schedule such that a shared vehicle Vn that is determined to not require maintenance is also moved to the maintenance site M. For example, in the scene illustrated in Figure 4, even if the controller 10 has determined that the shared vehicle V1, which is on standby at station ST1, does not require maintenance, if a use reservation is received from a certain user, designating station ST1 as the drop-off station by the use reservation reception function described later, the controller 10 can adjust the maintenance schedule such that the shared vehicle V1 is moved from station ST1 to a maintenance site M, to thereby secure parking space at station ST1.

In addition, in the present embodiment, the maintenance schedule can be adjusted such that a shared vehicle Vn is moved outside of business hours, with the aim to prevent an uneven distribution of shared vehicles Vn at specific stations.

Next, the use reservation reception function that is executed by the controller 10 of the present embodiment will be described. In the present embodiment, the controller 10 receives, from a user, a use reservation to start using a shared vehicle Vn from the start time of the next business hours, by the use reservation reception function. The use reservation includes the user's ID information, the user's current location information, information on the lending station set by the user, the ID information of the shared vehicle Vn that the user is trying to use, and information on the drop-off station that is set by the user, as described above.

In the present embodiment, when a use reservation is transmitted from a user terminal device 400X of a user, the controller 10 refers to the maintenance schedule described above, and accepts the use reservation if the lending station that is set by the user is available.

For example, if a shared vehicle Vn is on standby at the lending station that is set by a user, at the point in time in which a use reservation is transmitted from a user terminal device 400X of the user, the controller 10 accepts the use reservation. Alternatively, even if a shared vehicle Vn is not present at the lending station that is set by a user at the point in time in which a use reservation is transmitted from a user terminal device 400X of the user, the controller 10 refers to the above-described maintenance schedule, and accepts the use reservation if a shared vehicle Vn is scheduled to be routed to the lending station by the start time of the next business hours.

Even if a shared vehicle Vn is scheduled to be on standby at the start time of the next business hours at a lending station that is set by a user by a use reservation, if the remaining amount of the driving energy of the shared vehicle Vn is less than a predetermined threshold value, or if it is predicted that the maintenance state of the shared vehicle Vn will not satisfy a predetermined standard, at the start time of the next business hours, the controller 10 of the present embodiment can be configured to not accept a use reservation for the shared vehicle Vn. That is, the controller 10 can be configured to accept a use reservation for the shared vehicle Vn only when the remaining amount of the driving energy is a predetermined threshold value or more, and the maintenance state satisfies a predetermined standard, with respect to the shared vehicle Vn. Any value can be set as the predetermined threshold value; for example, the threshold value can be appropriately set according to the average value of the consumption amount of the driving energy per a predetermined period, based on the past use history of the shared vehicle Vn. An example of a predetermined standard is passing all of the inspection items for verifying flaws in the shared vehicle Vn.

When receiving a use reservation, the controller 10 can be configured to accept a use reservation only when there is additional parking space to which a shared vehicle Vn can be returned at the drop-off station that is set by the user, in addition to a shared vehicle Vn being on standby at the lending station that is set by a user.

Furthermore, the controller 10 of the present embodiment can change the maintenance schedule such that a use reservation can be accepted according to a transmitted use reservation, in addition to determining the acceptability of a use reservation with reference to the maintenance schedule as described above. For example, even if a shared vehicle Vn not scheduled to be on standby at the start time of the next business hours at the lending station that is set by the user at the point in time in which the use reservation is transmitted, the controller 10 can change the maintenance schedule such that a shared vehicle Vn will be routed to the lending station. In addition, even if a there is no parking space to which a shared vehicle Vn can be returned at the drop-off station, which is set by the user, at the point in time in which the use reservation is transmitted, the controller 10 can change the maintenance schedule such that a shared vehicle Vn that is currently parked at the drop-off station will be moved.

In the present embodiment, the controller 10 accepts such use reservations only during a reservation time period that is set in advance. The reservation time period can be a time period that includes at least a portion of the time period from the end time of business hours to the start time of the next business hours. Specifically, if the business hours are set to be 8:00-20:00, as illustrated in Figure 3, the reservation time period can be set to be 19:30-7:30, from the vicinity of the end time of a business hours to the vicinity of the start time of the next business hours.

In the example illustrated in Figure 3, the start time of the reservation time period was set to 30 minutes prior to the end time of the business hours (19:30), but the start time of the reservation time period can be an earlier time or a later time, regardless of the business hours. Additionally, the end time of the reservation time period is not limited to 30 minutes prior to the start time of the business hours (7:30), as illustrated in Figure 3, and can be set to any time until the start time of the business hours.

Furthermore, in Figure 3, an example was shown in which the reservation time period during which a use reservation by a user can be received is started at the end time of the immediate use time period described above (19:30) and ended at the start time of the immediate use time period (7:30), but the immediate use time period and the reservation time period can be overlapping time periods.

Next, the notification function that is executed by the controller 10 of the present embodiment will be described. The controller 10 communicates with each vehicle-mounted device 200Vn and each user terminal device 400X, and notifies, to the user, information to the effect that a use request of a shared vehicle Vn has been received; to the effect that a use reservation of a shared vehicle Vn has been received; to the effect that a return of a shared vehicle Vn has been completed; and the like.

In addition, the controller 10 can communicate with each vehicle-mounted device 200Vn and each user terminal device 400X, and can notify, to the user, information on the maintenance schedule described above, by the notification function.

Next, the return reception function that is executed by the controller 10 of the present embodiment will be described. The return reception function of the controller 10 is a function to receive a return of a shared vehicle Vn, in response to a return request for the shared vehicle Vn that is transmitted by the user via a vehicle-mounted device 200Vn or a user terminal device 400X.

For example, if station ST2 is set as the drop-off station for a shared vehicle V2, the controller 10 is able to receive a return of the shared vehicle V2 by a user U1 transmitting a return request to the shared vehicle management device 100 by operating a vehicle-mounted device 200V2, after parking the shared vehicle V2 at station ST2, as illustrated in Figure 1A.

A return request that is transmitted by a user includes the ID information, as well as the current location information of the shared vehicle Vn that was used by the user, and the controller 10 reads information corresponding to the ID information of the shared vehicle Vn from among the use requests 33 that are stored in the database 30, based on the ID information of the shared vehicle Vn that is included in the received return request; determines whether or not the shared vehicle Vn is located at the drop-off station that is set in advance; and treats the shared vehicle Vn as having been properly returned if it is determined that the shared vehicle Vn is located at the drop-off station.

Next, the billing function that is executed by the controller 10 of the present embodiment will be described. The billing function of the controller 10 is a function to bill the user that has returned a shared vehicle Vn for the usage fee according to the use time of the shared vehicle Vn.

In the present embodiment, if the user uses a shared vehicle Vn immediately after transmitting a use request for a shared vehicle Vn, the controller 10 calculates the time from when receiving a use request from the user to when receiving a return of the shared vehicle Vn by the user, as the use time of the shared vehicle Vn. Then, the controller 10 calculates the usage fee of the shared vehicle Vn according to the calculated use time, and bills the user for this usage fee by a method such as charging a credit card.

In this case, the controller 10 can subtract the use time between when receiving a use request of a user, and a predetermined first grace time, from the use time of the shared vehicle Vn to calculate the usage fee. The first grace time described above is set as a free use time as a service to the users, which is set giving consideration to the time required for a user to prepare before starting to use a shared vehicle Vn (for example, the time between when a user transmits a use request by operating a user terminal device 400X, moves to a lending station on foot, etc., boards the shared vehicle Vn, and carries out an operation to start using the shared vehicle Vn).

For example, if the first grace time is set to 30 minutes, the controller 10 calculates the usage fee for the shared vehicle Vn according to the use time, which starts from 30 minutes after receiving a use request from a user, until receiving a return of the shared vehicle Vn by the user. In this case, if, after receiving a use request from the user, the user boards and starts to use the shared vehicle Vn before 30 minutes has elapsed, which is the first grace time, the controller 10 can calculate the usage fee for the shared vehicle Vn according to the use time, starting from the time that the user actually started to use the shared vehicle Vn, until receiving a return of the shared vehicle Vn by the user.

In addition, in the present embodiment, if a user transmits a use reservation for a shared vehicle Vn to make a reservation to start using a shared vehicle Vn from a start time of the next business hours, the controller 10 calculates the time from the start time of the next business hours to receiving a return of the shared vehicle Vn by the user, as the use time of the shared vehicle Vn, and bills the user for the usage fee corresponding to this use time.

In this case, the controller 10 can subtract the use time between the start time of the next business hours, and a predetermined second grace time, from the use time of the shared vehicle Vn to calculate the usage fee. The second grace time a free use time is set as a service to the users, and is set giving consideration to the time required for a user to prepare before starting to use a shared vehicle Vn (for example, the time between when a user boards a shared vehicle Vn, and carries out an operation to start using the shared vehicle Vn), in the same manner as the first grace time described above.

For example, if the second grace time is set to 10 minutes, the controller 10 calculates the usage fee for the shared vehicle Vn according to the use time, which starts from 10 minutes after the start time of the business hours, until receiving a return of the shared vehicle Vn by the user. In this case, if, after the start time of the business hours, the user boards and starts to use the shared vehicle Vn before 10 minutes has elapsed, which is the second grace time, the controller 10 can calculate the usage fee for the shared vehicle Vn according to the use time, starting from the time that the user actually started to use the shared vehicle Vn, until receiving a return of the shared vehicle Vn by the user.

In the present embodiment, the second grace time is preferably set shorter than the first grace time. That is, in a scene in which there is a use reservation for a shared vehicle Vn, it can be thought that a user normally will have arrived at the lending station by the scheduled time that the shared vehicle Vn is to be started to be used (start time of the business hours), the need for the second grace time, which is started from this start time of the business hours, is relatively low. On the other hand, in a scene in which a shared vehicle Vn is to be immediately used, it requires time for a user to move to the lending station after transmitting a use request; therefore, the need for the first grace time, which is started from receiving a use request from the user, is relatively high. Accordingly, by setting the second grace time shorter than the first grace time, it is possible to set the free use times in accordance with the actual mode of use of the shared vehicle Vn. In addition, by setting the second grace time shorter, it is possible to urge the user to shorten the time waiting at the lending station, from the start time of the business hours until the shared vehicle Vn is used by the user, and as a result, the utilization rate of the shared vehicle Vn in the car sharing system is improved.

In the present embodiment, management and operation of the car sharing system is carried out by the functions that are realized by the controller 10 of the shared vehicle management device 100, as described above.

According to the present embodiment, the controller 10 of the shared vehicle management device 100 accepts a use request from a user that desires an immediate use of a shared vehicle Vn during the immediate use time period described above, and accepts a use reservation to start using the shared vehicle Vn from the start time of the next business hours during the reservation time period described above; therefore, the utilization rate of the shared vehicle Vn in the car sharing system is improved.

In a conventional one-way car sharing system, if a user intends to use a shared vehicle Vn by the same route at a set time (for example for commuting to work or school), there is the desire for a user to use a shared vehicle Vn at a specific station at a set time. However, in a conventional one-way car sharing system, a mode of use requesting a future use of a shared vehicle Vn is not accepted and only a mode of use requesting an immediate use of a shared vehicle Vn is accepted, with the aim to improve the utilization rate of the shared vehicle Vn, as described above. Consequently, if a user wants to use a shared vehicle Vn at a specific station at a set time, the user cannot apply for an immediate use of a shared vehicle Vn if a shared vehicle Vn is not actually on standby at the station.

In contrast, in the present embodiment, use reservation to start using a shared vehicle Vn from the start time of the next business hours is accepted during the reservation time period described above, a mode of using shared vehicles that matches the purpose of the user is proposed and the convenience of the car sharing system is improved; as a result, the utilization rate of the shared vehicle Vn is improved.

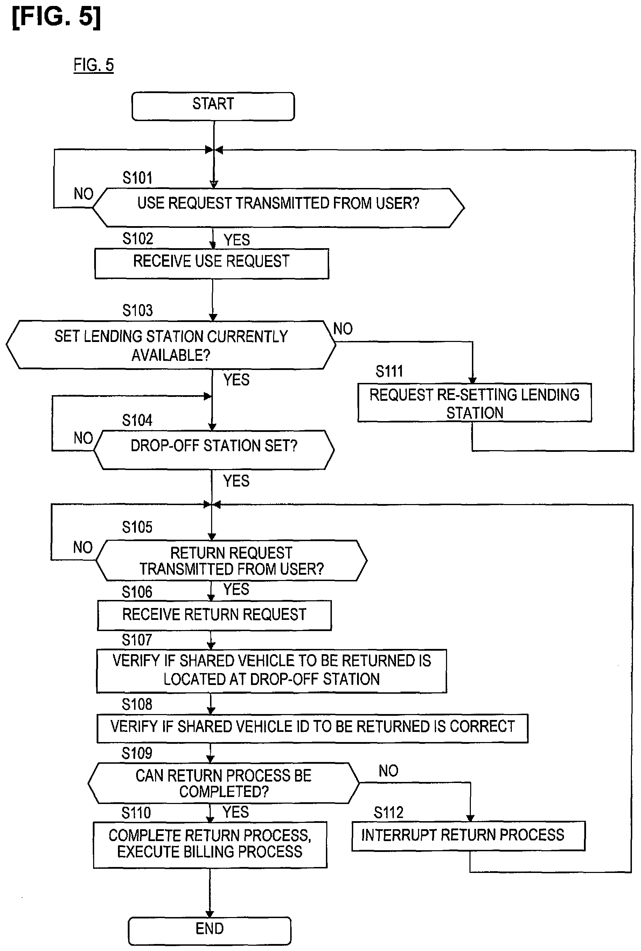

Next, an operation example of the present embodiment will be described. Figure 5 is a flowchart illustrating a control procedure of the car sharing system according to the shared vehicle management device 100 of the present embodiment. The flowchart illustrated in Figure 5 illustrates the control procedure from the time one user transmits a use request for immediately using one shared vehicle Vn and uses the shared vehicle Vn, to the time the user returns the shared vehicle Vn to a drop-off station.

First, in Step S101, the controller 10 of the shared vehicle management device 100 determines whether or not a use request has been transmitted by a user, via a user terminal device 400X. A use request includes the user's ID information, the user's current location information, information on the lending station set by the user, the ID of the shared vehicle Vn that the user is trying to use, and information on the drop-off station that is set by the user. Then, if it is determined that a use request has been transmitted in Step S101, the process proceeds to Step S102. On the other hand, if it is determined that a use request has not been transmitted in Step S101, the process is put on standby in Step S101.

In Step S102, the controller 10 receives a use request that has been transmitted from the user in Step S101 and stores the use request in the database 30.

In Step S103, the controller 10 refers to the use request that was received in Step S102, and determines whether or not the lending station that is set by the user is currently available. Specifically, if a shared vehicle Vn that is on standby is present at the station that is set as the lending station, and the shared vehicle Vn is currently in a lendable state, it is determined that the station is currently available. An example of a lendable state of a shared vehicle Vn is a state in which the remaining amount of the driving energy of the shared vehicle Vn is a predetermined threshold value or more, and the maintenance state satisfies a predetermined standard. Then, if it is determined in Step S103 that the lending station is currently available, the process proceeds to Step S104. On the other hand, if it is determined in Step S103 that the lending station is currently unavailable, the process proceeds to Step S111, and in Step S111, the controller 10 notifies the user to set a lending station again via the user terminal device 400X, and the process returns to Step S101 described above.

In Step S104, the controller 10 determines whether or not the user who transmitted the use request in Step S102 has set a drop-off station for returning the shared vehicle Vn. Then, if it is determined that a drop-off station has been set in Step S104, the process proceeds to Step S105. On the other hand, if it is determined that a drop-off station has not been set in Step S104, the process is put on standby in Step S104.

In Step S105, the controller 10 determines whether or not a return request for returning the shared vehicle Vn has been transmitted from the user. A return request that is transmitted by the user includes the ID information of the user, as well as the ID information and the location information of the shared vehicle Vn that was used by the user. Then, if it is determined that a return request has been transmitted in Step S105, the process proceeds to Step S106. On the other hand, if it is determined that a return request has not been transmitted in Step S105, the process is put on standby in Step S105.

In Step S106, the controller 10 receives the return request that was transmitted by the user in Step S105.

In Step S107, the controller 10 checks whether or not the shared vehicle Vn that is about to be returned by the user is located at the drop-off station that was set with respect to the shared vehicle Vn, based on the return request received in Step S106 and the information on the use request 33 that is stored in the database 30.

In Step S108, the controller 10 verifies whether or not the ID information of the shared vehicle Vn that is about to be returned by the user matches the ID information of the shared vehicle Vn that is included in the use request that is transmitted by the user, based on the return request received in Step S106 and the information on the use request 33 that is stored in the database 30.

In Step S109, the controller 10 determines whether or not a return process can be completed with respect to the shared vehicle Vn that is about to be returned by the user. Specifically, when it is determined that the current location of the shared vehicle Vn that is about to be returned by the user matches the location of the drop-off station, and that the ID information matches the ID information of the shared vehicle Vn that is included in the use request that is transmitted by the user, based on the information verified in Step S107 and Step S108, the controller 10 determines that the return process of the shared vehicle Vn can be completed. Then, if it is determined that the return process of the shared vehicle Vn can be completed in Step S109, the process proceeds to Step S110. On the other hand, if it is determined that the return process of the shared vehicle Vn cannot be completed in Step S109, the process proceeds to Step S112, the controller 10 interrupts the return process of the shared vehicle Vn, and the process returns to Step S105 described above.

If it is determined that the return process of the shared vehicle Vn can be completed in Step S109, the process proceeds to Step S110, and in Step S110, the controller 10 completes the return process of the shared vehicle Vn, calculates the use time of the shared vehicle Vn by the user, bills the user for the usage fee of the shared vehicle Vn according to the calculated use time, and ends the present process.

In the present embodiment, the shared vehicle management device 100 receives a use request for immediate use of a shared vehicle Vn from a user, and manages the use and return of the shared vehicle Vn by the user, as described above.

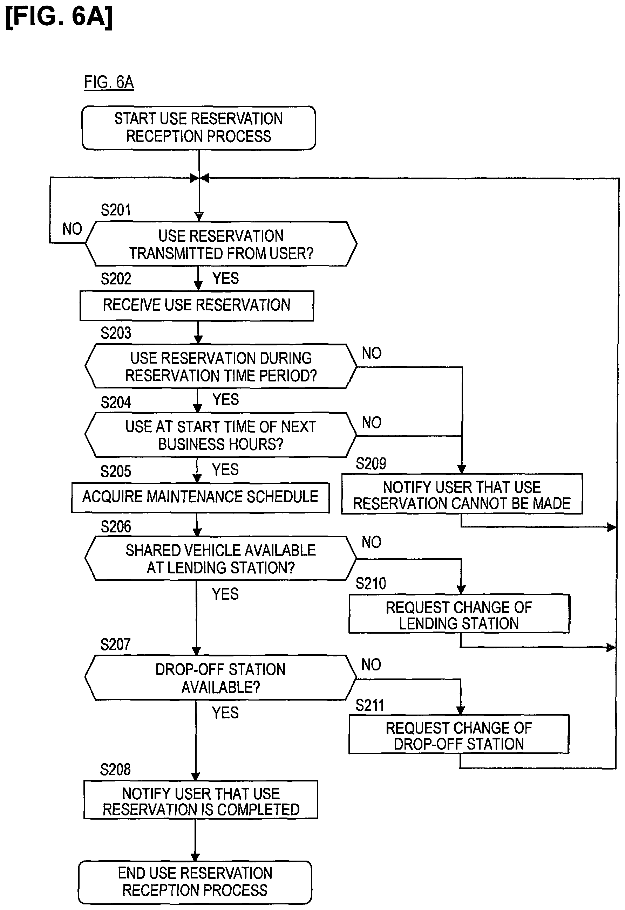

Next, the control procedure for the use reservation reception process by the shared vehicle management device 100, when one user makes a reservation to start using a shared vehicle Vn from the start time of the next business hours, will be described, with reference to the flowchart illustrated in Figure 6A.

First, in Step S201 illustrated in Figure 6A, the controller 10 determines whether or not a user has transmitted a use reservation via a user terminal device 400X. A use reservation includes the user's ID information, the user's current location information, information on the lending station set by the user, the ID of the shared vehicle Vn that the user is trying to use, and information on the drop-off station that is set by the user. Then, if it is determined that a use reservation has been transmitted in Step S201, the process proceeds to Step S202. On the other hand, if it is determined that a use request has not been transmitted in Step S201, the process is put on standby in Step S201.

In Step S202, the controller 10 receives the use reservation that has been transmitted from the user in Step S201 and stores the use reservation in the database 30.

In Step S203, the controller 10 determines whether or not the use reservation that is transmitted by the user in Step S201 was transmitted during a reservation time period, as illustrated in Figure 3. Then, if it is determined that the use reservation was transmitted during the reservation time period in Step S203, the process proceeds to Step S204. On the other hand, if it is determined that the use reservation was not transmitted during the reservation time period in Step S201, the process proceeds to Step S209, and the controller 10 notifies the user that a use reservation for the shared vehicle Vn cannot be made via the user terminal device 400X, and the process returns to Step S201 described above.

If it is determined that the use reservation was transmitted during the reservation time period in Step S203, the process proceeds to Step S204, and in Step S204, the controller 10 refers to the use reservation that was transmitted by the user in Step S201, and determines whether or not the content of the use reservation is a content that desires to use a shared vehicle Vn from the start time of the next business hours. Then, if it is determined that the use reservation has a content desiring the use of a shared vehicle Vn from the start time of the next business hours in Step S204, the process proceeds to Step S205. On the other hand, if it is determined that the use reservation does not have a content desiring the use of a shared vehicle Vn from the start time of the next business hours in Step S204, the process proceeds to Step S209 described above.

In Step S205, the controller 10 acquires a maintenance schedule that is created by the maintenance schedule creation function described above.

In Step S206, the controller 10 refers to the maintenance schedule acquired in Step S205, and determines whether or not a shared vehicle Vn that can be used at the start time of the next business hours is present at the lending station that is set in the use reservation that was transmitted by the user in Step S201. Specifically, the controller 10 determines that a shared vehicle Vn that can be used at the start time of the next business hours is present, if a shared vehicle Vn is already on standby at the lending station or a shared vehicle Vn is scheduled to be maintained outside of business hours and to be routed to the lending station, and, further, with respect to the shared vehicle Vn, if it is predicted that the remaining amount of the driving energy will be a predetermined threshold value or more and the maintenance state will satisfy a predetermined standard, at the start time of the next business hours. Then, if it is determined that a shared vehicle Vn that can be used at the start time of the next business hours is present at the lending station in Step S206, the process proceeds to Step S207. On the other hand, if it is determined that a shared vehicle Vn that can be used at the start time of the next business hours is not present at the lending station in Step S206, the process proceeds to Step S210, and the controller 10 notifies the user to change the lending station via the user terminal device 400X, and the process returns to Step S201 described above.

If it is determined that a shared vehicle Vn that can be used at the start time of the next business hours is present at the lending station in Step S206, the process proceeds to Step S207, and in Step S207 the controller 10 refers to the maintenance schedule acquired in Step S205, and determines whether or not the drop-off station that is set in the use reservation that was transmitted by the user in Step S201 is available. Specifically, when it is predicted that a space for parking a shared vehicle Vn will be present at the set drop-off station after the start time of the next business hours, the controller 10 determines that the drop-off station is available. Then, if it is determined that the set drop-off station is available in Step S207, the process proceeds to Step S208. On the other hand, if it is determined that the set drop-off station is unavailable in Step S207, the process proceeds to Step S211, and the controller 10 notifies the user to change the drop-off station via the user terminal device 400X, and the process proceeds to Step S201 described above.

If it is determined that the set drop-off station is available in Step S207, the process proceeds to Step S208, and in Step S208, the controller 10 notifies the user that the use reservation by the user has been accepted and that the use reservation has been completed via the user terminal device 400X, and ends the present process.

The use reservation reception process illustrated in Figure 6A is carried out as described above.

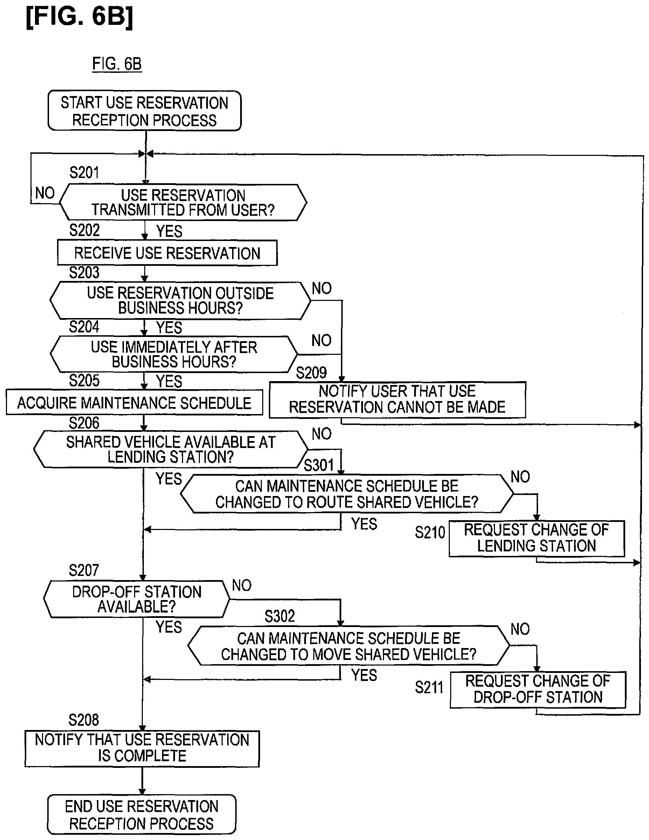

In the present embodiment, the use reservation reception process described above can be carried out by the method illustrated in Figure 6B. Figure 6B is a flowchart illustrating another example of a use reservation reception process. Another example of the use reservation reception process will be described with reference to Figure 6B. The operation procedure illustrated in Figure 6B is the same as the operation procedure illustrated in Figure 6A in the procedure of Steps S201-S211. Accordingly, Figure 6B is provided with the same step reference symbols as Figure 6A, and descriptions thereof will be cited in the present example.

First, in the process of Steps S201-S205 illustrated in Figure 6B, the controller 10 carries out processes such as receiving a use reservation from a user, and acquiring a maintenance schedule that is created by the maintenance schedule creation function described above, etc.

In the subsequent Step S206, the controller 10 refers to the acquired maintenance schedule, and determines whether or not a shared vehicle Vn that can be used at the start time of the next business hours is present at the lending station that is set in the use reservation that was transmitted by the user, in the same manner as in Figure 6A described above. If it is determined that a shared vehicle Vn that can be used at the start time of the next business hours is not present at the lending station in this Step S206, unlike the control procedure of Figure 6A described above, the process proceeds to Step S301.

In Step S301, the controller 10 determines whether or not the maintenance schedule can be changed such that a shared vehicle Vn will be routed to the lending station at which it was determined that a shared vehicle Vn that can be used is not present in Step S206. Then, if it is determined that the maintenance schedule can be changed so as to route a shared vehicle Vn in Step S301, the process proceeds to Step S207. On the other hand, if it is determined that the maintenance schedule cannot be changed so as to route a shared vehicle Vn in Step S301, the process proceeds to Step S210 described above.

In Step S207, the controller 10 refers to the acquired maintenance schedule in the same manner as in Figure 6A described above, and determines whether or not the drop-off station that is set in the use reservation that was transmitted by the user in Step S201 is available. If it is determined that the set drop-off station is unavailable in this Step S207, unlike the control procedure of Figure 6A described above, the process proceeds to Step S302.

In Step S302, the controller 10 determines whether or not the maintenance schedule can be changed such that a shared vehicle Vn that is parked at the drop-off station, which was determined to be unavailable in Step S207, is moved from the drop-off station in order to secure an additional space in which a shared vehicle Vn can be parked. Then, if it is determined that the maintenance schedule can be changed to move a shared vehicle Vn at the drop-off station in Step S302, the process proceeds to Step S208. On the other hand, if it is determined that the maintenance schedule cannot be changed to move a shared vehicle Vn at the drop-off station in Step S302, the process proceeds to Step S211 described above.

In the subsequent Step S208, in the same manner as the control procedure in Figure 6A described above, the controller 10 notifies the user that the use reservation by the user has been accepted and that the use reservation has been completed via the user terminal device 400X, and ends the present process.

The embodiment of the shared vehicle management system according to the present invention is configured and operates in the manner described above, and thus exerts the following effects.
[1] In the present embodiment, a use request from a user that desires an immediate use of a shared vehicle Vn is accepted during the immediate use time period described above, and a use reservation to start using the shared vehicle Vn from the start time of the next business hours is accepted during the reservation time period described above. Thus, a mode of using shared vehicles that matches the purpose of the user is proposed and the convenience of the car sharing system is improved; as a result, the utilization rate of the shared vehicle Vn is improved.
[2] In the present embodiment, the reservation time period is a time period that includes at least a portion of the time period from the end time of business hours of the car sharing system to the start time of the next business hours; therefore, it becomes possible to receive a use reservation for a shared vehicle Vn from a user even outside of business hours of the car sharing system, and the convenience of the car sharing system is further improved.
[3] In the present embodiment, a maintenance schedule is created for carrying out routing and maintenance of shared vehicles Vn, and regarding shared vehicles Vn that will receive maintenance outside of business hours according to the created maintenance schedule, use reservations are accepted only for shared vehicles Vn that are scheduled to be routed to a station by the start time of the business hours. Thus, use reservations are accepted only for shared vehicles Vn that can be actually used, and the convenience of the car sharing system is further improved.
[4] In the present embodiment, at least one of replenishing the drive energy of the shared vehicle Vn, and carrying out inspection, maintenance, repair, or cleaning of the shared vehicle Vn, is carried out as maintenance of the shared vehicle Vn; therefore, the shared vehicle Vn to be used by a user is maintained in a well-maintained state, and the user is thereby able to comfortably use the shared vehicle Vn; as a result, the convenience of the car sharing system is further improved.
[5] In the present embodiment, the maintenance schedule for shared vehicles Vn is adjusted according to the use reservations that are transmitted by the users. Specifically, if a shared vehicle Vn is not on standby at the lending station that is set in a use reservation at the point in time in which the use reservation is received, the maintenance schedule is adjusted such that a shared vehicle Vn is routed to the lending station by the start time of the next business hours. Additionally, if the drop-off station that is set in the use reservation cannot be used at the point in time in which the use reservation is received, the maintenance schedule is adjusted such that a shared vehicle Vn is moved from the drop-off station. It thereby becomes possible to flexibly accommodate the requests of use reservations from users, and the convenience of the car sharing system is further improved.
[6] In the present embodiment, a use reservation from a user is accepted only for shared vehicles Vn with which the remaining amount of the driving energy is predicted to be a predetermined threshold value or more, and the maintenance state is predicted to satisfy a predetermined standard, at the start time of business hours; therefore, use reservations are accepted only for shared vehicles Vn that can be actually used, and the convenience of the car sharing system is further improved.
[7] In the present embodiment, a second grace time, which is a free use time that is set at the time of a use reservation, is set shorter than a first grace time, which is a free use time that is set at the time of an immediate use. It is thereby possible to urge the user to shorten the time waiting for the use reserved shared vehicle Vn at the lending station, from the start time of the business hours until the shared vehicle Vn is used by the user, and as a result, the utilization rate of the shared vehicle Vn in the car sharing system is improved.
[8] If the shared vehicle management method of the present embodiment is carried out, the actions and effects described above are exerted.

Embodiments of the present invention were described above, but these embodiments are described in order to facilitate understanding of the present invention, and are not described in order to limit the present invention. Therefore, the elements disclosed in the embodiments above are intended to include all design modifications and equivalents thereto that lie within the technical range of the present invention.

In the above-described embodiment, the controller 10 of the shared vehicle management device 100 corresponds to the first use reception means, the second use reception means, the maintenance schedule creation means, the prediction means, and the billing means, and the database 30 of the shared vehicle management device 100 corresponds to the storage means, respectively.

### Reference Signs List

- 1000 ...: Shared vehicle management system
- 100 ...: Shared vehicle management device
- 10 ...: Controller
- 20 ...: Communication device
- 30 ...: Database
- V1-Vn ...: Shared vehicle
- 200V1-200Vn ...: Vehicle-mounted device
- 300 ...: Internet
- 400X-400Z ...: User terminal device

## Claims

1. A shared vehicle management device for managing a plurality of shared vehicles that are shared by a plurality of users, comprising:
a storage means that stores information on a plurality of stations where the shared vehicles are lent and returned;
a first use reception means that receives a use request from a user for immediate use of the shared vehicle during a predetermined immediate use time period that includes at least a portion of the available time period of the shared vehicle; and
a second use reception means that receives a use reservation from a user to start using the shared vehicle from a start time of the next available time period during a predetermined reservation time period.

2. The shared vehicle management device according to claim 1, wherein the reservation time period is any time period between an end time of the available time period of the shared vehicle and the start time of the next available time period.

3. The shared vehicle management device according to claim 1 or 2, further comprising:
a maintenance schedule creation means that creates a maintenance schedule when carrying out routing and maintenance of the shared vehicle outside of the available time period, wherein
the second use reception means accepts a use reservation from the user only for shared vehicles that are scheduled to have completed maintenance by the start time of the available time period and to be routed to the station, regarding the shared vehicles that are to be maintained outside of the available time period, based on the maintenance schedule.

4. The shared vehicle management device according to claim 3, wherein the maintenance of the shared vehicles includes at least one of replenishing the driving energy; and inspection, maintenance, repair, and cleaning of the shared vehicles.

5. The shared vehicle management device according to claim 3 or 4, wherein the maintenance schedule creation means creates a maintenance schedule for the shared vehicles according to the content of a use reservation that is received by the second use reception means.

6. The shared vehicle management device according to claim 5, wherein if the shared vehicle is not on standby at a station at which the user desires to rent the shared vehicle at the point in time in which the use reservation is received, the maintenance schedule creation means adjusts the maintenance schedule such that the shared vehicle will be routed to the station by the start time of the next available time period.

7. The shared vehicle management device according to claim 5 or 6, wherein if a space to which the shared vehicle can be returned is not present at a station at which the user desires to return the shared vehicle according to the use reservation at the point in time in which the use reservation is received, the maintenance schedule creation means adjusts the maintenance schedule such that the shared vehicle will be withdrawn from the station by the time that the shared vehicle is returned to the station by the user.

8. The shared vehicle management device according to any one of claims 1 to 6, further comprising:
a prediction means that predicts a remaining amount of driving energy and a maintenance state of the shared vehicles, wherein
the second use reception means accepts a use reservation for the shared vehicle by the user, only for the shared vehicles that are predicted to have a remaining amount of the driving energy of a predetermined threshold value or more, and the maintenance state of which to have satisfied a predetermined standard, at the start time of the next available time period.

9. The shared vehicle management device according to any one of claims 1 to 7, further comprising:
a billing means for billing a user that has used the shared vehicle for a usage fee according to a use time of the shared vehicle, wherein
the billing means,
when receiving a use request from the user by a first use reception means, carries out a billing process after subtracting the use time between receiving the use request, and a predetermined first grace time, from the use time of the shared vehicle,
when receiving a use request from the user by a second use reception means, carries out a billing process after subtracting the use time between a scheduled time that the shared vehicle is to be started to be used, and a predetermined second grace time, from the use time of the shared vehicle, and
the second grace time is set shorter than the first grace time.

10. A shared vehicle management method comprising:
a computer for managing a plurality of shared vehicles that are shared by a plurality of users executes:
a step to store information on a plurality of stations where the shared vehicles are lent and returned;
a step to accept a use request for immediate use of the shared vehicle from the user during a predetermined immediate use time period that includes at least a portion of the available time period of the shared vehicle; and
a step to accept a use reservation to start using the shared vehicle from a start time of the next available time period from the user during a predetermined reservation time period.
